# EUROPEAN PATENT APPLICATION

(11) **EP 0 599 513 A1**
(43) Date of publication of application: **01.06.1994**
(21) Application number: 93308942.7
(22) Date of filing: 09.11.1993
(51) Int. Cl.: G01B 7/03

(54) **A method of measuring workpieces using a surface contacting measuring probe**

(30) Priority: 20.11.1992 GB 9224335
(71) Applicant: RENISHAW plc, Wotton-Under-Edge Gloucestershire GL12 8JR (GB)
(72) Inventor: McMurtry, David Roberts, Gloucestershire GL12 7EF (GB)
(74) Representative: Waite, John

(57) **Abstract**

A method of measuring the position of a workpiece surface is disclosed which utilises an analogue probe which produces at least one output indicative of the amount of stylus deflection. The probe is driven by a machine towards the surface, and when contact is made the initial deflection signal triggers the machine controller to read simultaneously the outputs of the machine scales and the probe output. The machine continues its forward movement for a short time after receipt of the probe signal and then stops and reverses. The outputs of the machine and probe are read at intervals during the reverse movement. A computer then plots the relationship between the probe readings and the machine scale readings and extrapolates it back to the point at which the probe stylus deflection was zero. This gives an indication of the position of the stylus at the actual instant of contact. A further benefit is that, because the probe stylus remains in contact with the workpiece surface for a short time while readings are being taken, any inaccuracies introduced because of machine vibration can be averaged and thus reduced by plotting a best fit line through the recorded points.

## Description

The present invention relates to measurement of workpieces.

Analogue probes are known in which the deflection of a probe stylus when acted upon by a force is directly measured by measuring devices within the probe.

It is known, for example, from UK Patent No 1,573,447, to have an analogue probe in which the stylus deflection in each of three orthogonal axes is measured separately and individual outputs of the deflection in each axis are provided separately. It is also known, for example, from UK Patent No. 1,237,813 to provide only a single output of stylus deflection from a single one dimensional measurement transducer which is arranged to be moved by both an axial movement of the stylus in its measuring direction, and a tilting movement of the stylus about any axis in a plane transverse to the measuring direction.

In a probe of the latter kind, while the movement of the transducer within the probe bears a one to one relationship with the movement of the stylus in the measuring direction of the transducer, this is not so with movement in any other direction. Hence it is not possible with such probes to determine exactly the x, y and z coordinates of the displacement of the stylus tip.

According to the present invention there is provided a method of measuring a workpiece using a machine on which a measuring probe is mounted for movement into different positions to enable the probe to contact the workpiece, said machine having at least one measuring device for providing an output indicative of the position of the probe relative to a datum position, the probe having a deflectable workpiece-contacting stylus, at least one measuring device for measuring deflections of the stylus and means for providing one or more probe outputs derived from said device or devices and which is indicative of the amount of deflection of the stylus from a rest position, the method comprising the steps of:
moving the probe to bring the stylus into contact with the surface of a workpiece to be measured and continuing said movement for a limited distance after initial contact has been made between the stylus and the workpiece,
reversing the movement of the probe,
simultaneously recording the outputs of the measuring devices of the machine and of the probe at a plurality of instants during said reversed movement,
computing by extrapolation from said recorded outputs the values of the outputs of the measuring device or devices of the machine at a pre-determined amount of deflection of the stylus from its rest position, and
providing said value or values as the output of the machine.

By this means the position of the probe stylus as recorded by the measuring device or devices of the machine, when the stylus has a pre-determined amount of deflection can be determined. The pre-determined amount of deflection may be set at a threshold value above zero, or at a zero deflection, thus giving an indication of the instant at which the stylus loses, or will lose, contact with the workpiece.

The probe may be of the type in which more than one measuring device is used but the outputs from the measuring devices are combined to produce a single probe output. In a preferred embodiment of the invention the output or outputs of the probe are arranged to have a linear relationship with deflection of the stylus and is set to be zero in the undeflected condition of the stylus. Under these circumstances the computing step includes the steps of computing the best fit of a straight line through the recorded points and extrapolating this line to the point at which the probe output or outputs would be zero. This gives an accurate indication of the position of the surface.

This additional step enables the following further significant benefit to be derived from the invention.

When measuring workpieces on machines, there may be vibrations affecting the machine which result in errors being produced in the probe readings while the probe is in contact with the workpiece surface and at the precise moment when the stylus loses contact with the workpiece surface. Using the present method, the probe stylus remains in contact with the workpiece for a significant period of time while the probe and machine outputs are being recorded. By calculating the best fit line through the recorded outputs the errors due to vibration will be averaged and the accuracy of the extrapolated point will be enhanced.

The machine with which the method may be carried out may be a co-ordinate measuring machine or machine tool.

The invention will now be more particularly described, by way of example only, with reference to the accompanying drawings in which:

Fig 1 is a diagrammatic representation of a machine with which the invention is used.

Fig 2 is a diagrammatic representation of the probe on the machine of Fig 1.

Fig 3 is a graphical representation of the calculation performed by the computer of the machine of Fig 1.

Fig 4 is a diagrammatic layout of the apparatus required to perform the calculations in accordance with the present invention.

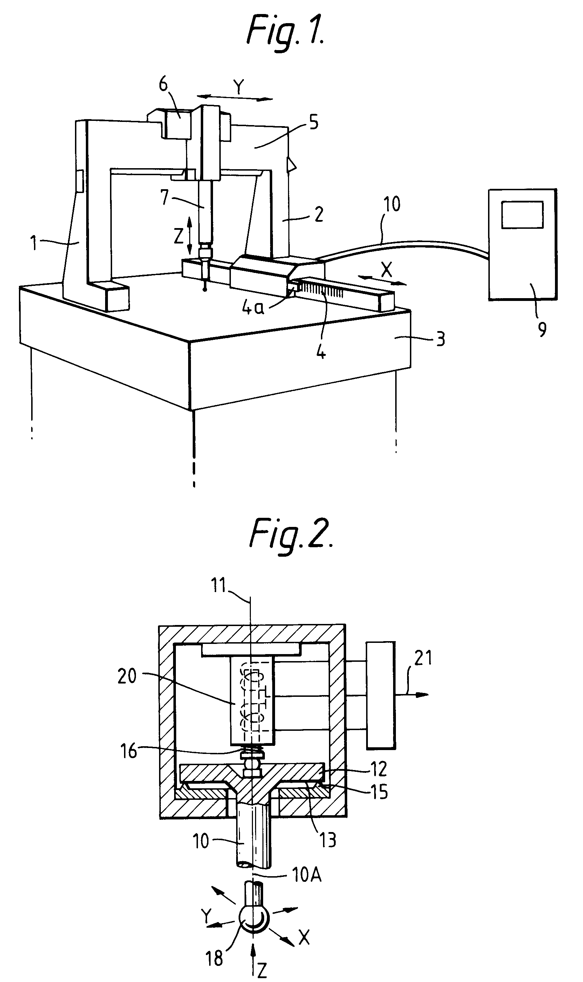

Referring now to the drawings, there is shown in Fig 1 a basic co-ordinate measuring machine which is well-known in the art. The machine is a gantry type machine in which two side pillars 1 and 2 are movable along a base 3 in a first direction x, their movement being measured by a suitable scale 4 and scale reader 4A. The pillars support a bridge 5 which extends in a second direction y, at right angles to the x direction and on which a carriage 6 is mounted for movement in the y direction. In turn the carriage supports a spindle 7 which extends in a third direction z at right angles to both of the x and y directions. Further scales and scale readers (not shown) measure the movement of the carriage in the y direction and of the spindle in the z direction. The scales and scale readers constitute the measuring devices of the machine.

Thus it can be seen that a probe attached to the end of the spindle can be positioned anywhere within the working volume of the machine to measure a workpiece mounted on the base. This may be accomplished manually, or by a machine controller under the guidance of a computer 9 connected to the machine by a cable 10.

The probe shown in Fig 2 has a well known construction, for example as shown in UK Patent Specification No. 2,094,478A and is not therefore described in detail. Basically it includes a workpiece-contacting stylus 10 which is carried by a plate 12 having a plane undersurface 13 supported on a an annular knife-edge 15, and urged into contact with the knife-edge by a spring 16. The stylus has a workpiece-contacting ball 18 at its end. Thus it can be seen that the stylus can be displaced in the z direction (vertically in the drawing) and can be tilted about the knife-edge when acted upon by forces in any directions in x y plane. The probe has a longitudinal axis 11 with which the longitudinal axis 10A of the stylus is aligned.

A single probe measuring device 20 is provided which is constrained for uni-directional movement in the z direction. The device provides an output 21 indicative of the movement of the plate in the z direction when a force acts on the stylus ball in any direction. Various forms of measuring device may be used for example, inductive or capacitive transducers, or piezo resistive or other forms of strain gauges, but a preferred form is a conventional LVDT.

Clearly the output of the transducer will be less for a tilting movement of the plate, due to a given deflection of the end of the stylus caused by a force in the x, y plane, than it would be for the same deflection of the stylus in the z direction.

Thus it is not possible from the single transducer output to determine the precise deflection of the stylus ball in the x, y and z direction after a contact has been made with the surface of the workpiece. The use of the analogue output of such probes has therefore in the past been limited to using a threshold level of output to indicate that a contact has been made with the workpiece, and to cause a signal to be sent to the machine to output the instantaneous readings of the scales and stop further movement of the machine. The position of the stylus ball in space was then determined by the computer from the instantaneous machine scale readings and from a previous calibration of the probe relating to stylus pre-travel.

In order to be able to determine the precise position of the stylus ball in the working volume of the machine when it contacts the surface of the workpiece the following method is adopted.

The output of the probe measuring device (LVDT) is set to a value, which may conveniently be zero, which represents the position of the stylus ball relative to the fixed probe axis in the rest position of the stylus i.e. the position it occupies when no external force acts on the stylus ball.

The probe is driven by the machine controller towards the workpiece. During this movement the readings of the machine scales are continuously fed to a computer 9 which forms part of the overall machine control system.

As soon as the stylus ball is deflected by contact with the workpiece the output of the LVDT starts to change. A further limited amount of travel of the machine is allowed by the computer and then the machine is stopped and reversed. During the reversing movement, the outputs of the machine scales and of the probe LVDT are recorded simultaneously at intervals and stored. When sufficient readings have been taken the computer calculates from the stored readings a notional straight line through the readings and extrapolates back to find the reading of each of the machine scales which would have existed at a predetermined amount of deflection of the stylus.

Where the probe is of the type having only a single output transducer, problems may arise when the stylus approaches an inclined surface, in that the stylus may slip to one side when contact is made with the surface. To avoid this problem the machine should be programmed to ensure that the stylus approaches the surface in a direction which is normal, or substantially normal, thereto within the angle of friction.

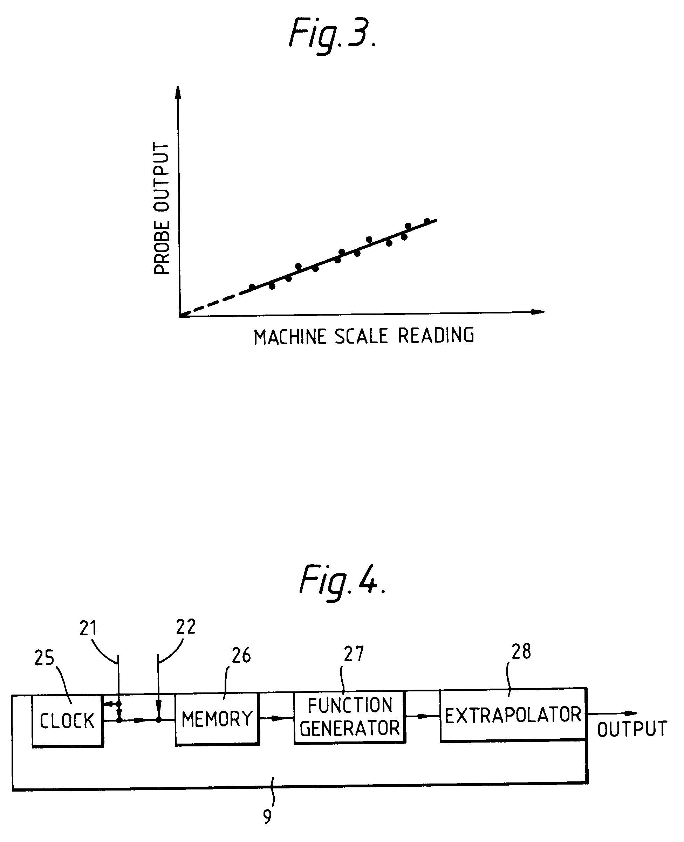

Fig 3 shows by a graphical representation the calculations which are made by the machine's computer. The vertical axis shown represents the output 21 of the probe LVDT and the horizontal axis represents the machine scale output 22 on one axis. It can be seen that as the machine continues its limited movement after the first contact has been made between the probe stylus and the workpiece, the probe LVDT output increases. When the machine is reversed the LVDT output decreases.

The probe LVDT is designed to have a linear displacement versus output signal characteristic so that it can be easily extrapolated backwards to determine what the machine scale reading will be when the level of the output of the probe LVDT reaches the level set for the rest position (in this example a zero level). However, this is not an essential requirement, and measuring devices with nonlinear characteristics may be used provided that a calibration of the characteristic is pre-programmed into the computer.

Where the machine is moving the probe in more than one axis simultaneously, the machine computer has to be programmed to perform the calculation for all three machine axes to determine the x, y and z coordinates of the point of first contact between the stylus and workpiece.

If the probe is being used on a coordinate measuring machine (CMM) in a still environment there will be little or no machine vibrations to upset the straight line plot of the probe LVDT versus machine scale readings. Also the computer in a CMM, which performs more of the control functions than in a machine tool, can be programmed to produce as the machine output, the calculated machine coordinates at the desired amount of stylus deflection. Thus with no vibration to interfere with the probe readings, the extrapolation may be carried back to a zero stylus deflection, thereby giving an accurate reading of the probe position when the stylus first contacted the workpiece surface.

In operating with a machine tool, on the other hand, it is conventional that the machine latches and outputs its scale readings under instructions from the mechanical controller. Also much more significant vibration is present in a machine tool environment. Thus, the method of operation for a conventional machine tool control system is to program the computer to extrapolate the machine scale readings back to a safe threshold level at which machine vibrations are not likely to cause the probe outputs to pass instantaneously back through zero. The machine controller is then instructed to latch and output the machine scale readings in conventional manner when the scale readings reach the calculated threshold. In the more hostile environment, of a machine tool, the vibrations of the probe and workpiece will provide errors in the readings recorded, to the extent that they will not lie on an obvious line. In these circumstances the computer is programmed to calculate the best fit of a straight line through the points on the notional graph, and then to extrapolate that line back to the desired threshold level. Provided the time interval over which readings are taken is greater than one full vibration cycle, the errors introduced by the vibration will be averaged and hence significantly reduced.

By taking the readings when the machine is reversing backwards after the stylus has contacted the workpiece, another important advantage arises in that the probe readings immediately after the initial contact with the workpiece surface, which are affected by stylus bounce, are not included. This means that the probe can be driven towards the workpiece at relatively high speed, thus speeding up the measuring process.

Within the computer the elements of software and hardware required for performing the calculations are generally known and are illustrated in Fig 4. The first deflection reading from the probe LVDT is passed to a clock 25 which times the sequence of simultaneous readings of the probe LVDT outputs 21 and machine scale outputs 22. These readings are passed to a memory store 26. When all required readings have been taken the clock stops and the machine movement is terminated. The stored readings are passed to a function generator 27 which produces a best fit straight line through the readings by the least squares method, and then an extrapolator 28 extrapolates the line back to the defined rest position output (zero) and outputs the machine scale readings corresponding to this value.

The function generator may calculate the best fit straight line separately for each axis, or calculate the best fit of the vector in three dimensions before extrapolating back to the zero output point.

The invention allows a very simple, single transducer, analogue probe to be used to enable the machine to produce a signal at the precise mechanical zero of the probe which relates to the instant of contact of the probe stylus with the workpiece. Thus the probe effectively behaves as if it was operating in the touch trigger mode of operation, but with much greater accuracy than in the past using the threshold trigger method.

Another form of analogue probe which may be used, in accordance with the method of the present invention, is a probe of the type described in European Patent Specification No. 87105395.5. Although described as producing a single trigger signal after a threshold level of strain has been recorded from three strain gauges in the probe, the circuit could be modified to record the strain readings of the strain gauges individually, or in combination, and to provide outputs at various threshold levels from which an extrapolated zero strain value can be derived as explained above.

By applying the method with probes having only a single output, even though this may be derived from multiple measurement transducers, the computer calculations are much simplified.

## Claims

1. A method of measuring a workpiece using a machine on which a measuring probe is mounted for movement into different positions to enable the probe to contact the workpiece, said machine having at least one measuring device (4,4A) for providing an output indicative of the position of the probe relative to a datum position, the probe having a deflectable workpiece-contacting stylus (10), at least one measuring device (20) for measuring deflections of the stylus and means for providing one or more probe outputs (21) derived from said device or devices and which are indicative of the amount of deflection of the stylus from a rest position, the method being characterised by the steps of:
moving the probe to bring the stylus (10) into contact with the surface of a workpiece to be measured and continuing said movement for a limited distance after initial contact has been made between the stylus and the workpiece,
reversing the movement of the probe,
simultaneously recording the outputs of the measuring devices of the machine (4,4A) and of the probe (20) at a plurality of instants during said reversed movement,
computing by extrapolation from said recorded outputs the values of the outputs of the measuring device or devices of the machine at a pre-determined amount of deflection of the stylus from its rest position, and
providing said value or values as the output of the machine.

2. A method as claimed in claim 1 and characterised in that the probe has a plurality of measuring devices (20) and the method includes the step of combining the outputs of the devices to derive a single output from the probe.

3. A method as claimed in claim 1 or claim 2 and characterised by the further step of moving the machine so that the stylus (10) approaches the surface of the workpiece in a direction which is substantially normal thereto.

4. A method as claimed in claim 1 or claim 2 and characterised in that the computing step comprises the step of computing the best fit line through the recorded output points.

5. A method as claimed in claim 1 or claim 2 and characterised in that the probe produces at least one output signal (21) which varies linearly with the deflection of the stylus, and the computing step comprises the step of computing the best fit straight line through the recorded output points.

6. A method as claimed in claim 1 or claim 2 and characterised in that the computing step includes the steps of computing the position of the probe at the condition of zero stylus deflection in each of the three machine axes independently.

7. A method as claimed in claim 3 and characterised in that the computing step includes the steps of computing the single three dimensional vector of the stylus deflection by combining the recorded outputs of the measuring devices of the machine and the probe in three orthogonal axes, and extrapolating the single vector back to obtain the position of the probe at the condition of zero stylus deflection.
